# EUROPÄISCHE PATENTSCHRIFT

(11) **EP 2 301 827 B1**
(45) Veröffentlichungstag und Bekanntmachung des Hinweises auf die Patenterteilung: **18.07.2018**
(21) Anmeldenummer: 10009251.9
(22) Anmeldetag: 06.09.2010
(51) Int. Cl.: B62D 51/02, B66F 9/075

(54) **Lagertechnikstapler, insbesondere Hubwagen**
Storage truck, in particular lift truck
Chariot élévateur de stockage, notamment chariot de levage

(30) Priorität: 21.09.2009 DE 102009042318
(43) Veröffentlichungstag der Anmeldung: 30.03.2011
(73) Patentinhaber: OM Carrelli Elevatori S.p.A., 20020 Lainate (MI) (IT)
(72) Erfinder: Cavan, Jacques, 60240 Montagny en Vexin (FR); Vachard, Laurent, 60430 Silly-Tillard (FR)
(74) Vertreter: Patentship Patentanwaltsgesellschaft mbH

(56) Entgegenhaltungen:
- EP-A1- 0 466 065
- EP-A1- 2 014 605
- EP-A1- 2 239 187
- EP-A2- 1 547 910
- DE-A1-102009 058 599
- FR-A1- 2 954 303
- JP-A- 2002 145 128
- US-A- 1 404 419
- US-A1- 2006 103 093

## Beschreibung

Die Erfindung betrifft ein Lagertechnikstapler, insbesondere Hubwagen, mit einer an einem Fahrzeugrahmen gefederten, Fahrerplattform, insbesondere einer Fahrerstandplattform.

Als Hubwagen ausgebildete Lagertechnikstapler, können als reine Stapler für den Mitfahrbetrieb ausgeführt sein oder als Stapler, die sowohl für einen Mitgängerbetrieb als auch für einen Mitfahrerbetrieb geeignet sind. Bei Derartige Stapler sind beispielsweise als Niederhubwagen, Hochhubwagen, Niederhubkommissionierer oder Schlepper ausgebildet.

Bei Staplern für den Mitfahrbetrieb ist für die Bedienperson eine als Fahrerstandplattform ausgebildete Fahrerplattform vorgesehen, wobei bereits Lösungen bekannt sind, die Fahrerstandplattform gefedert am Fahrzeugrahmen abzustützen. Ein derartiger Lagertechnikstapler für den Mitfahrerbetrieb mit einer gefederten Fahrerstandplattform ist beispielsweise aus der DE 100 55 263 A1 bekannt. Die Fahrerstandplattform ist mittels zweier Kreuzstreben an dem Fahrzeugrahmen in vertikaler Richtung geführt und steht mittels Hebeln mit einer auf Torsion beanspruchten Feder-Dämpfer-Einheit in Wirkverbindung. Aufgrund der hohen Anzahl von zueinander beweglichen Bauteilen weist eine derartige gefederte Fahrerstandplattform einen hohen Bauaufwand auf. Zudem ist das Federungsverhalten von der Feder-Dämpfer-Einheit bestimmt und vorgeben, wobei eine Anpassung des Federungsverhalten, beispielsweise an unterschiedliche Gewichte der Bedienperson, nur durch eine aufwändige Anpassung oder einen Austausch der Federelemente ermöglicht wird.

Aus der DE 196 01 374 B4 ist ein Lagertechnikstapler für den reinen Mitfahrerbetrieb bekannt, bei dem eine Fahrerstandplattform schwenkbar an dem Fahrzeugrahmen angeordnet ist und an der Fahrerstandplattform ein Abstützträger angeordnet ist, der über ein Feder-Dämpferelement, beispielsweise einen Gummipuffer, an dem Fahrzeugrahmen abgestützt ist, um eine Federung der Fahrerstandplattform zu ermöglichen. Eine Anpassung der Federung der Fahrerstandplattform, beispielsweise an unterschiedliche Gewichte der Bedienperson, ist nicht möglich. Lagertechnikstapler, die sowohl für den Mitgängerbetrieb als auch für den Mitfahrerbetrieb geeignet und ausgelegt sind, sind mit einer klappbaren Fahrerstandplattform versehen, die sich im Mitgängerbetrieb in einer eingeklappten Stellung befindet und für den Mitfahrerbetrieb ausgeklappt werden kann.

Ein Fahrerplatzmodul mit einer klappbaren Fahrerstandplattform für einen Lagertechnikstapler, der wahlweise im Mitgängerbetrieb und im Mitfahrerbetrieb betreibbar ist, ist aus der DE 101 59 565 A1 bekannt. Eine Federung für die Fahrerstandplattform in der ausgeklappten Stellung für den Mitgängerbetrieb ist nicht vorgesehen. Einen Lagertechnikstapler für den Mitgängerbetrieb und den Mitfahrerbetrieb mit einer klappbaren Fahrerstandplattform ist auch aus der EP 0 449 029 B1 bekannt. Die Fahrerstandplattform ist in der ausgeklappten Stellung für den Mitfahrerbetrieb mittels einer Verriegelungsvorrichtung verriegelt.

Die US 2006/0103093 A1 offenbart eine Arbeitsmaschine mit einer klappbaren Fahrerstandplattform, bei der zur Schwingungsdämpfung ein Stoßdämpfer vorgesehen ist, der als eine unter einer Gasvorspannung stehende Zylinder-Kolben-Einheit ausgebildet sein kann.

Aus der US 1,404,419 ist ein Hubwagen mit einer Fahrerplattform bekannt, die über eine einstellbare Feder gefedert ist. Aus der EP 1 547 910 A2 ist eine gefederte Fahrerplattform für ein deichselgeführtes Flurförderzeug bekannt, gemäß dem Oberbegriff von Anpruch 1, bei der über eine Zylinderkonstruktion eine einstellbare Feder- und Dämpfungsfunktion durch eine Hydraulikflüssigkeit oder ein Gas erfolgt.

Der vorliegenden Erfindung liegt die Aufgabe zugrunde, einen Lagertechnikstapler der eingangs genannten Gattung zur Verfügung zu stellen, bei dem mit geringem Bauaufwand eine gefederte Fahrerplattform vorgesehen werden kann, deren Federungsverhalten auf einfache Weise angepasst werden kann.

Diese Aufgabe wird dadurch gelöst, dass die Fahrerplattform mittels einer im Einstelldruck veränderbaren Luftfeder gefedert am Fahrzeugrahmen abgestützt ist, wobei durch die Veränderung des Einstelldrucks eine Anpassung des Federungsverhaltens erzielt wird. Mittels einer Luftfeder kann auf einfache Weise und mit geringem Bauaufwand die Fahrerplattform gefedert und gedämpft am Fahrzeugrahmen abgestützt werden, um Schwingungen und Stöße aus Fahrbahnunebenheiten zu dämpfen und den Komfort und die Ergonomie des Lagertechnikstaplers zu verbessern. Der wesentliche Vorteil einer Luftfeder besteht darin, dass durch die Veränderung des Einstelldruckes auf einfache Weise und mit geringem Aufwand eine Anpassung des Federungsverhaltens erzielbar ist, so dass das Federungsverhalten der Fahrerplattform von der Bedienperson auf einfache Weise verändert werden kann, insbesondere an unterschiedliche Gewichte der Bedienperson angepasst werden kann, um einen komfortablen Betrieb des Lagertechnikstaplers mit verbesserter Ergonomie zu ermöglichen.

Erfindungsgemäß ist die Luftfeder als Balgzylinder, insbesondere als Einfaltenbalgzylinder, ausgebildet. Derartige Balgzylinder ermöglichen bei geringem Bauaufwand und geringem Bauraumbedarf eine einstellbare Federung der Fahrerplattform, wobei durch einfaches Veränderung des Luftdruckes in dem Balgzylinder die Federungseigenschaften auf einfache und schnelle Weise verändert und angepasst werden können.

Zweckmäßigerweise ist hierzu die Luftfeder mit einem Ventil zum Anschluss an eine Luftpumpe oder eine stationäre Druckluftversorgung versehen. Gattungsgemäße Lagertechnikfahrzeug werden in der Regel innerhalb von Fabrikhallen und Fabrikanlagen eingesetzt, in denen eine stationäre Druckluftversorgung vorhanden ist. Durch das Ventil und einen üblichen Ventilanschlussstutzen kann somit die Luftfeder auf einfache Weise über die stationäre Druckluftversorgung oder eine manuell betätigte Luftpumpe im Einstelldruck verändert und somit das Federungsverhalten angepasst und verändert werden.

Sofern das Lagertechnikfahrzeug universell eingesetzt werden soll, ist es gemäß einer zweckmäßigen Ausgestaltung der Erfindung ebenfalls möglich, in dem Lagertechnikstapler einen Druckluftkompressor vorzusehen, der mit der Luftfeder verbunden ist, so dass die Luftfeder mit einer fahrzeuginternen Druckluftversorgung aufgepumpt werden kann, um eine Anpassung der Federungsverhalten der Fahrerplattform zu erzielen.

Die Fahrerplattform ist gemäß einer bevorzugten Ausführungsform der Erfindung um eine im wesentlichen horizontale Schwenkachse schwenkbar gelagert, wobei die Fahrerplattform mit mindestens einem Hebel versehen ist, der mit einer Andrückplatte in Wirkverbindung bringbar ist, wobei die Andrückplatte mit der Luftfeder in Wirkverbindung steht. Über entsprechende Hebel einer schwenkbar angeordneten Fahrerplattform und eine mit den Hebeln in Verbindung bringbare Andrückplatte kann mit geringem Bauaufwand eine Wirkverbindung zwischen der Fahrerplattform und der Luftfeder hergestellt werden, um die Fahrerplattform über die Luftfeder am Fahrzeugrahmen gefedert abzustützen. Die Luftfeder kann hierbei vor Beschädigungen geschützt in dem Fahrzeugrahmen angeordnet werden, da über die Andrückplatte und die Hebel die Verbindung zu der schwenkbar gelagerten Fahrerplattform herstellbar ist.

Es ist jedoch ebenfalls möglich, die Luftfeder an der Fahrerplattform anzuordnen oder die Fahrerplattform vertikal verschiebbar zu lagern.

Besondere Vorteile ergeben sich hierbei, wenn die Andrückplatte um eine im Wesentlichen horizontale Schwenkachse schwenkbar gelagert ist. Da sich bei einer als Balgzylinder ausgebildeten Luftfeder mit dem Einstelldruck die Bauhöhe verändert, kann über eine schwenkbar gelagerte Andrückplatte auf einfache Weise ein Ausgleich für die sich ändernde Bauhöhe des Balgzylinders erzielt werden. Alternativ ist es ebenfalls möglich, für die Andrückplatte eine lineare Ausgleichsbewegung vorzusehen, beispielsweise mittels einer Linearführung der Andrückplatte.

Zweckmäßigerweise ist hierbei die Andrückplatte mit mindestens einer Aufnahme für den Hebel versehen. Durch den Eingriff des Hebels in eine an den Hebel angepassten Aufnahme, die von der Schwenkachse der Andrückplatte beabstandet ist, um einen entsprechenden Hebelarm an der Andrückplatte zu definieren, kann auf einfache Weise ein Drehmoment an der Andrückplatte zur Abstützung der Fahrerplattform an der Luftfeder erzielt werden. Mit einer derartigen Aufnahme ist es ebenfalls auf einfache Weise möglich, dass sich über den Ausgleichsbewegungsbereich der Andrückplatte der Hebel der Fahrerplattform an der Andrückplatte abstützten kann.

Gemäß einer bevorzugten Ausgestaltungsform der Erfindung ist die Fahrerplattform mittels zwei seitlich beabstandeter Schwenkträger um die Schwenkachse schwenkbar gelagert und weist die Andrückplatte zwei seitlich beabstandete Aufnahmen für die Hebel auf, wobei die Hebel an den Schwenkträgern ausgebildet sind und die Luftfeder in seitlicher Richtung zwischen den Hebeln angeordnet ist. Hierdurch ist ein einfacher und bauraumsparender Aufbau der Federung erzielbar, da die Luftfeder in dem Bauraum zwischen den Schwenkträgern mit den Hebeln angeordnet werden kann.

Mit besonderem Vorteil weist die Luftfeder zwei Anschlussplatten mit einem dazwischen angeordneten Balgzylinder auf, wobei die Luftfeder mittels einer Anschlussplatte an der Andrückplatte befestigt ist und mittels der weiteren Anschlussplatte an dem Fahrzeugrahmen abgestützt ist. Durch die Befestigung des Balgzylinders an der Andrückplatte wird ermöglicht, das Ventil mit dem Ventilanschlussstutzen im Bereich der Andrückplatte vorzusehen, so dass eine gute Zugänglichkeit des Ventils erzielbar ist.

Sofern gemäß einer vorteilhaften Ausgestaltungsform der Erfindung die Andrückplatte und die Fahrerplattform an einem Trägerbauteil schwenkbar befestigt sind, das an dem Fahrzeugrahmen des Lagertechnikfahrzeugs lösbar befestigbar ist, kann mit geringem Bauaufwand eine Vormontagebaugruppe für die gefederte Fahrerplattform mit der Luftfeder erzielt werden, die auf einfache Weise an dem Lagertechnikfahrzeug befestigt werden kann.

Das Trägerbauteil ist hierbei bevorzugt mit seitlich beabstandeten Lagerflanschen für die Lagerung der Schwenkträger der Fahrerplattform und für die Lagerung von Lagerflanschen der Andrückpatte versehen, wobei das Trägerbauteil zwischen den Lagerflanschen mit einer Aussparung zur Aufnahme der Luftfeder versehen ist. Zwischen den Befestigungsflanschen des Trägerbauteils kann sich somit die im Bereich der Aussparung angeordnete Luftfeder direkt an dem Fahrzeugrahmen mit der entsprechenden Anschlussplatte abstützen.

Die Aufnahmen für die Hebel an der Andrückplatte sind zweckmäßigerweise im Bereich der Lagerflansche der Andrückplatte angeordnet, wodurch der Bauraumbedarf, insbesondere in Längsrichtung, weiter verringert werden kann.

Mit besonderem Vorteil sind die Schwenkachse der Fahrerplattform und die Schwenkachse der Andruckplatte in vertikaler Richtung beabstandet, wobei die Hebel und die Aufnahmen zwischen den Schwenkachsen angeordnet sind. Hierdurch können ebenfalls eine bauraumsparende Bauweise in vertikaler Richtung und günstige Verhältnisses der Hebelarme zwischen dem Hebel und Schwenkachse der Fahrerplattform sowie zwischen der Aufnahme und der Schwenkachse der Andrückplatte erzielt werden.

Sofern gemäß einer bevorzugten Weiterbildung der Erfindung an mindestens einem Hebel der Fahrerplattform eine Federeinrichtung angeordnet ist, die über einen Betätigungsstößel mit der Aufnahme in Wirkverbindung bringbar ist, um eine Einklappbewegung der Fahrerplattform zu unterstützen, kann bei einem Verlassen der Fahrerplattform durch die Bedienperson mittels der Federeinrichtung eine Einklappbewegung der Fahrerplattform in eine Zwischenstellung erzielt werden, wodurch in Verbindung min einer Sensoreinrichtung, die die Stellung der Fahrerplattform ermittelt, eine Totmannschaltung erzielbar ist.

Besondere Vorteile ergeben sich bei der Ausbildung des Lagertechnikstapler zum wahlweisen Betrieb im Mitgängerbetrieb und Mitfahrerbetrieb, wobei die Fahrerplattform als klappbare Fahrerstandplattform ausgebildet ist, die von einer eingeklappten Stellung im Mitgängerbetrieb in eine ausgeklappte Stellung im Mitfahrerbetrieb klappbar ist, wobei die Fahrerstandplattform in der ausgeklappten Stellung für den Mitfahrerbetrieb mittels der Luftfeder gefedert am Fahrzeugrahmen abgestützt ist. Mittels der als Balgzylinder ausgebildeten Luftfeder kann eine klappbare Fahrerstandplattform in der ausgeklappten Stellung mit geringem Bauaufwand und auf einfache Weise gefedert an dem Fahrzeugrahmen abgestützt werden, wobei weiterhin eine Anpassung der Federungseigenschaften durch einfaches Verändern des Einstelldruckes der Luftfeder erzielbar ist. Mit der erfindungsgemäßen Luftfeder kann somit bei einem im Mitgängerbetrieb und im Mitfahrerbetrieb verwendbaren Lagertechnikstapler mit geringem Bauaufwand im Mitfahrerbetrieb bei ausgeklappter Stellung der Fahrerstandplattform ein verbessertes Fahrverhalten und eine verbesserte Ergonomie für die Bedienperson erzielt werden.

Weitere Vorteile und Einzelheiten der Erfindung werden anhand der in den schematischen Figuren dargestellten Ausführungsbeispiele näher erläutert. Hierbei zeigt
- Figur 1: einen erfindungsgemäßen Lagertechnikstapler in einer perspektivischen Darstellung,
- Figur 2: die Fahrerstandplattform des Staplers der Figur 1 in der ausgeklappten Stellung für den Mitfahrerbetrieb in einer perspektivischen Darstellung,
- Figur 3: die Fahrerstandplattform des Staplers der Figur 1 in der eingeklappten Stellung für den Mitgängerbetrieb in einer perspektivischen Darstellung,
- Figur 4: einen Ausschnitt der Figur 2 in einer vergrößerten Schnittdarstellung,
- Figur 5: die Fahrerstandplattform in einer Zwischenstellung und
- Figur 6: einen Ausschnitt der Figur 3 in einer vergrößerten Schnittdarstellung.

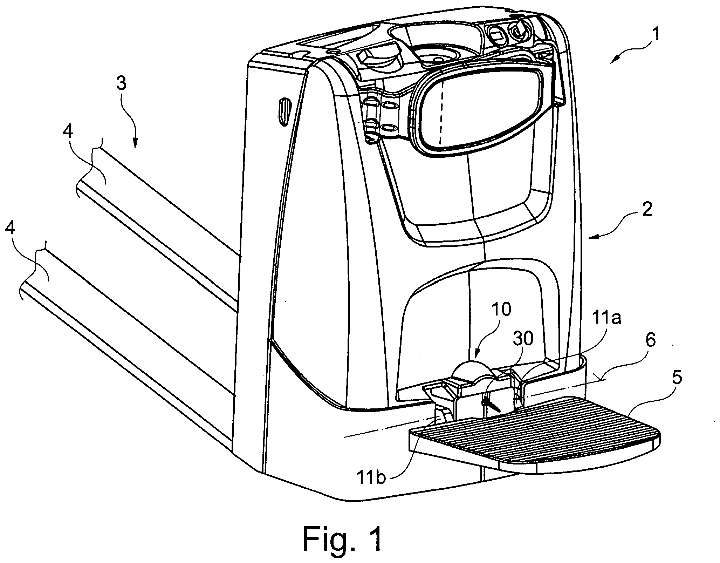

In der Figur 1 ist ein erfindungsgemäßer Lagertechnikstapler 1, der beispielsweise als deichselgeführter Hubwagen, insbesondere Niederhubwagen, ausgebildet ist, dargestellt. Der Lagertechnikstapler 1 weist einen Antriebsteil 2 und einen relativ zu dem Antriebsteil 2 anhebbaren und absenkbaren Lastteil 3 auf. Der Lastteil 3 umfasst eine von beispielsweise zwei seitlich beabstandeten Lastarmen 4 gebildete Lastgabel.

Mittels an den Spitzen der Lastarme 4 angeordneten und nicht mehr dargestellter Lastrollen ist der Lastteil 3 auf einer Fahrbahn abgestützt.

In dem Antriebsteil 2 ist eine nicht mehr dargestellte Fahrantriebseinheit, die ein Antriebsrad und einen das Antriebsrad antreibenden elektrischen Fahrantriebsmotor umfasst, um eine vertikale Schwenkachse lenkbar angeordnet ist. Das Lenken und die Bedienung des Lagertechnikstaplers 1 durch eine Bedienperson erfolgt mittels einer nicht mehr dargestellten Deichsel, die an der Oberseite des Antriebsteils 2 in dessen mittleren Bereich angeordnet ist.

Der erfindungsgemäße Lagertechnikstapler 1 ist zum wahlweisen Betrieb im Mitgängerbetrieb und im Mitfahrerbetrieb vorgesehen. Hierzu ist an dem Antriebsteil 2 gegenüberliegend zu dem Lastteil 3 eine als Fahrerstandplattform ausgebildete Fahrerplattform 5 angeordnet, die um eine horizontale, in Fahrzeugquerrichtung angeordnete Schwenkachse 6 klappbar am Antriebsteil 2 angeordnet ist. In der Figur 1 befindet sich die Fahrerplattform 5 in einer ausgeklappten Stellung für den Mitfahrerbetrieb des Lagertechnikstaplers 1.

Durch Hochschwenken um die Schwenkachse 6 kann die Fahrerplattform 5 in eine eingeklappte Stellung für den Mitgängerbetrieb des Lagertechnikstaplers 1 gebracht werden. In der Vorderseite des Antriebsteils 2 ist für die eingeklappte Fahrerplattform 5 eine Ausbuchtung vorhanden, so dass sich im Mitgängerbetrieb bei eingeklappter Fahrerplattform 5 die Fahrerplattform 5 innerhalb der Kontur des Antriebsteils 2 befindet.

Erfindungsgemäß ist die Fahrerplattform 5 in der ausgeklappten Stellung für den Mitfahrerbetrieb mittels einer im Einstelldruck veränderbaren Luftfeder 10 am Fahrzeugrahmen abgestützt, um eine Federung und Dämpfung der Fahrerplattform 5 im Mitfahrerbetrieb des Lagertechnikstaplers 1 zu erzielen.

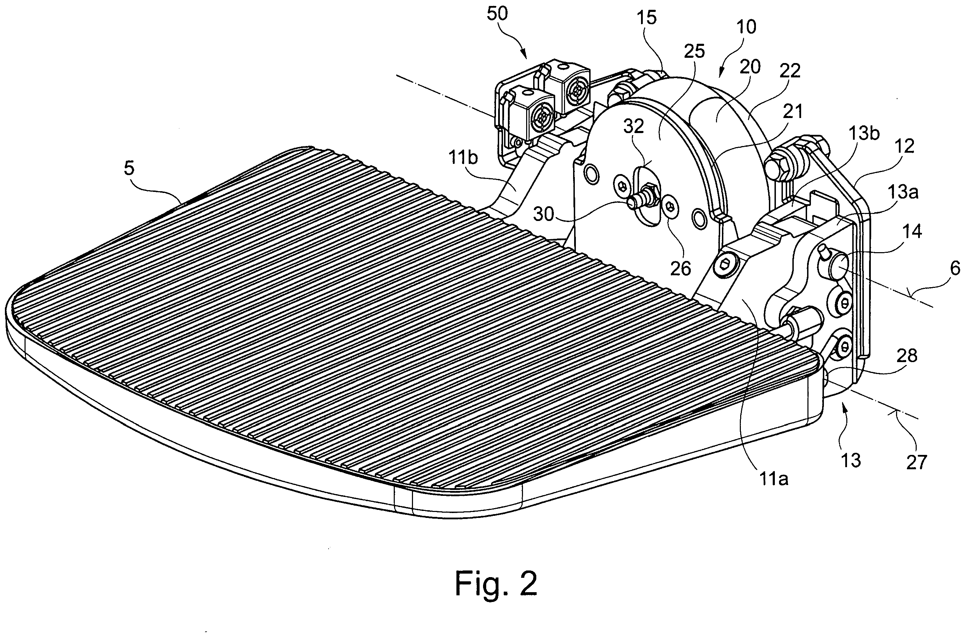

In den Figuren 2 bis 6 ist die Fahrerplattform 5 mit der Luftfeder 10 in einer konstruktiven Ausführungsform näher dargestellt.

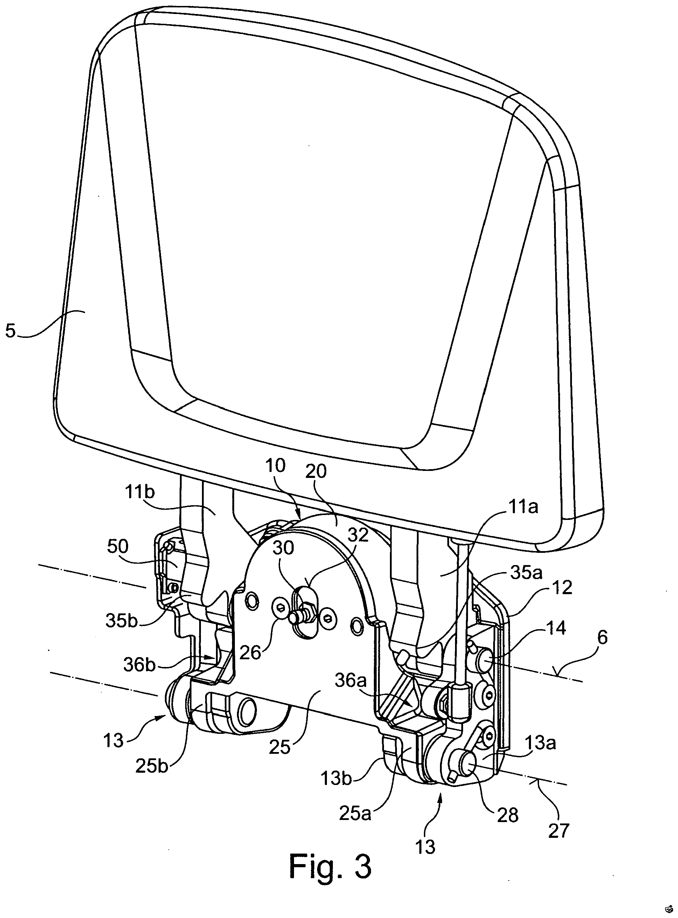

Wie aus den Figuren 2 und 3 gezeigt ist, weist die als Fahrerstandplattform ausgebildete Fahrerplattform 5 zwei seitlich und in Fahrzeugquerrichtung beabstandete Schwenkträger 11a, 11b auf, die in einem Trägerbauteil 12 um die Schwenkachse 6 schwenkbar gelagert sind. Das Trägerbauteil 12 ist hierzu für jeden Schwenkträger 11a bzw. 11b mit zwei vertikalen Flanschplatten 13a, 13b versehen, die einen Lagerflansch 13 bilden, zwischen denen der Schwenkträger 11a bzw. 11b angeordnet und mittels jeweils eines Lagerbolzens 14 schwenkbar gelagert sind.

Das Trägerbauteil 12 ist zwischen den seitlich beabstandeten Lagerflanschen 13 mit einer Aussparung versehen, in der die Luftfeder 10 angeordnet ist. Die Luftfeder 10 ist hierbei in horizontaler Richtung angeordnet und erstreckt sich in Fahrzeugslängsrichtung. Mittels Befestigungsschrauben 15 ist das Trägerbauteil 12 an einer entsprechenden vertikalen Rahmenplatte des Fahrzeugrahmens des Lagertechnikstaplers 1 lösbar befestigbar.

Die Luftfeder 10 ist von einem Balgzylinder 20 gebildet, beispielsweise einem Einfaltenbalgzylinder, der zwischen zwei Anschlussplatten 21, 22 angeordnet ist. Mittels der Anschlussplatte 22 ist die Luftfeder 10 an der vertikalen Rahmenplatte des Fahrzeugrahmens des Lagertechnikstaplers 1 abgestützt. Mittels der Anschlussplatte 21 ist die Luftfeder an einer Andrückplatte 25 befestigt, beispielsweise mittels entsprechender Befestigungsschrauben 26. Die Andrückplatte 25 ist um eine horizontale, in Fahrzeugquerrichtung angeordnete Schwenkachse 27 an dem Trägerbauteil 12 schwenkbar gelagert. Die Schwenkachse 27 ist hierbei in vertikaler Richtung von der Schwenkachse 6 der Fahrerplattform 5 beabstandet.

Die Andrückplatte 25 ist zur Lagerung an der Trägerplatte 12 im unteren Bereich mit seitlich beabstandeten Lagerflanschen 25a, 25b versehen. Die vertikalen Flanschplatten 13a, 13b des Trägerbauteils 12 bilden hierbei jeweils einen entsprechenden Lagerflansch 13, zwischen denen der Lagerflansch 25a bzw. 25b der Andrückplatte 25 angeordnet und mittels jeweils eines entsprechenden Lagerbolzens 28 schwenkbar gelagert ist.

Zur Veränderung des Einstelldruckes der Luftfeder 10 ist der Balgzylinder 20 mit einem Ventil 30 versehen, beispielsweise einem üblichen Ventilanschlussstutzen. Die Andrückplatte 25 ist mit einer langlochförmigen Ausnehmung 32 versehen, durch die sich das Ventil 30 erstreckt. Wie in Verbindung mit der Figur 1 ersichtlich ist, ist eine vordere vertikale Rahmenwand des Lagertechnikstaplers 1 ebenfalls mit einer nutförmigen Ausnehmung versehen, so dass sich das Ventil 30 am Antriebsteil 2 nach Außen erstreckt und von Außen zugänglich ist.

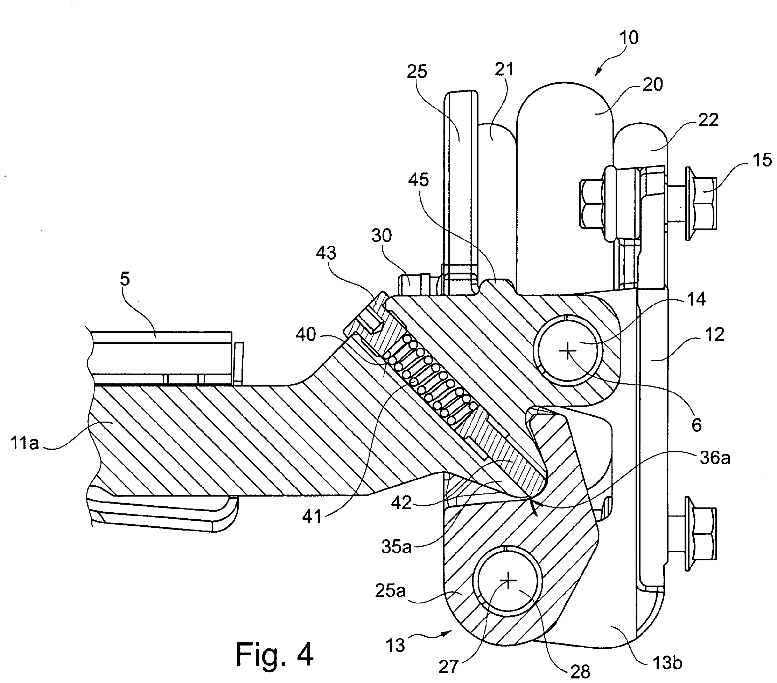

Zur Herstellung einer Wirkverbindung zwischen der Fahrerplattform 5 und der Andrückplatte 25 ist - wie in den Figuren 4 bis 6 in Verbindung mit der Figur 3 ersichtlich ist - jeder Schwenkträger 11a, 11b der Fahrerplattform 5 mit einem von der Schwenkachse 6 beabstandeten Hebel 35a, 35b versehen. Der Hebel 35a, 35b ist hierbei von jeweils einer nockenförmigen Erweiterung des Schwenkträgers 11a, 11b gebildet und somit an dem Schwenkträger 11a, 11b angeformt. Die Anrückplatte 25 ist im Bereich der Lagerflansche 25a, 25b mit jeweils einer im Querschnitt V-förmigen und an die Hebel 35a, 35b angepasste Aufnahme 36a, 36b versehen, die von der Schwenkachse 27 beabstandet sind in der sich in der ausgeklappten Stellung der Fahrerplattform 5 - wie in der Figur 4 dargestellt ist - die Hebel 35a, 35b abstützen.

Die Aufnahmen 36a, 36b und die Hebel 35a, 35b sind hierbei in vertikaler Richtung zwischen den Schwenkachsen 6 und 27 angeordnet, so dass eine Belastung der Fahrerplattform 5 durch eine auf der Fahrerplattform 5 stehende Bedienperson und somit ein Verschwenken der Schwenkträger 11a, 11b um die Schwenkachse 6 entgegen dem Uhrzeigersinn zu einem Verschwenken der Andrückplatte 25 um die Schwenkachse 27 im Uhrzeigersinn führt, wodurch die Fahrerplattform 5 über die Luftfeder 10 am Fahrzeugrahmen gefedert abgestützt ist.

In dem Schwenkträger 11a der Fahrerplattform 5 ist im Bereich des Hebels 35a eine Aufnahmebohrung 40 für eine Federeinrichtung 41 ausgebildet, die mit einem Betätigungsstößel 42 zusammenwirkt. Der Betätigungsstößel 42 erstreckt sich durch den Hebel 35a und steht mit einem aus dem Hebel 35a herauskragenden Ende mit der Aufnahme 36a der Andrückplatte 12 in Wirkverbindung. In der in der Figur 4 dargestellten ausgeklappten Stellung der Fahrerplattform 5 wird die an einer Verschlussschraube 43 der Aufnahmebohrung 40 abgestützte Federeinrichtung 41 von dem an der Aufnahme 36a anliegenden Betätigungsstößel 42 vorgespannt.

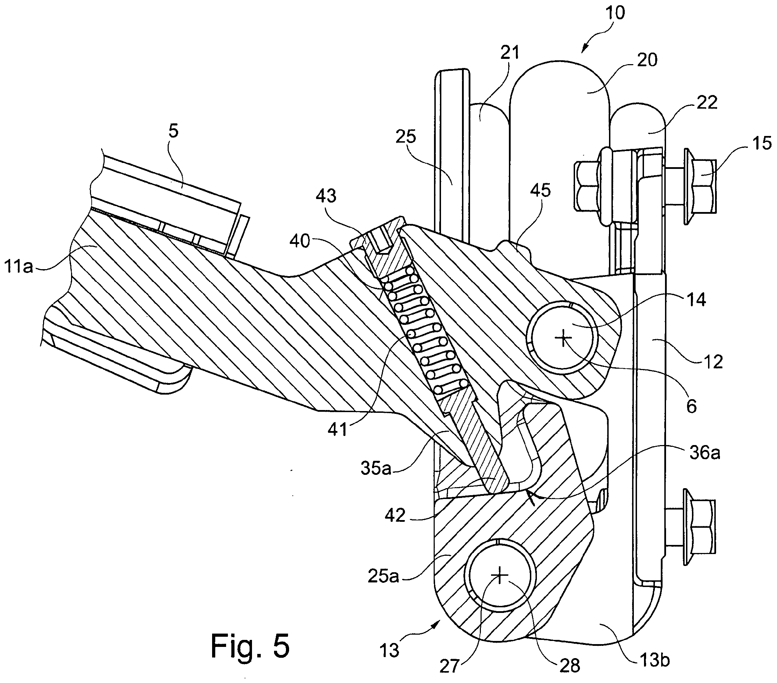

Steigt eine Bedienperson von der Fahrerplattform 5, wird somit die Fahrerplattform 5 mittels der Federeinrichtung 41 und dem sich an der Aufnahme 36a der Andrückplatte 25 abstützenden Betätigungsstößel 42 in Richtung der eingeklappten Stellung hochgeklappt, bis der Betätigungsstößel 42 mit einem Anschlagbund an einem Bohrungsabsatz der Aufnahmebohrung 40 anliegt. In der Figur 5 ist die Zwischenposition der Fahrerplattform 5 dargestellt. In Verbindung mit Sensoreinrichtungen 50, die die eingeklappte Stellung und die ausgeklappte Stellung der Fahrerplattform 5 ermitteln, kann mittels der Federeinrichtung 41 auf einfache Weise eine Totmannschaltung erzielt werden.

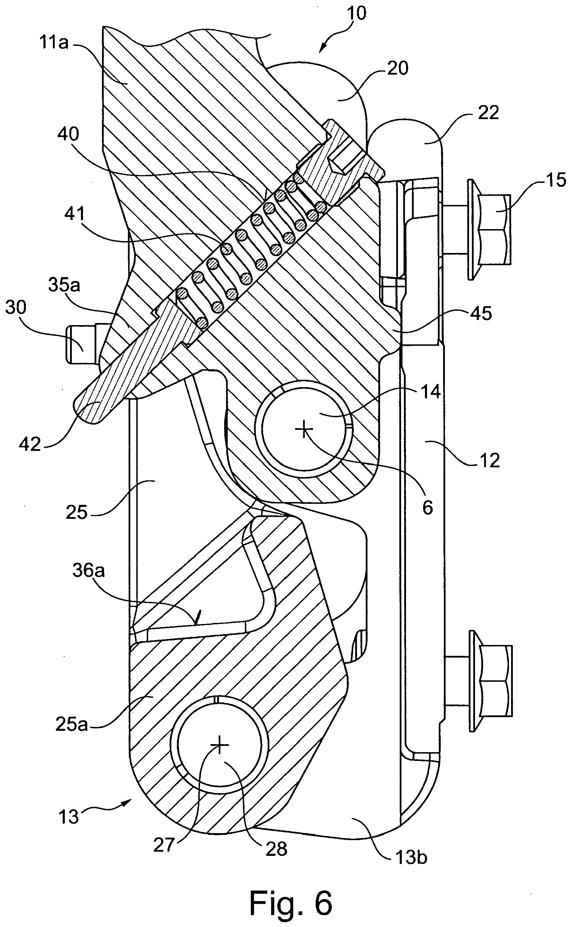

In der Figur 6 ist die Fahrerplattform 5 in der eingeklappten Stellung dargestellt, in der die Hebel 35a, 35b außer Eingriff mit den Aufnahmen 36a, 36b der Andrückplatte 25 sind. An den Schwenkhebeln 11a bzw. 11b sind Anschlagnasen 45 angeformt, mit denen die Schwenkhebel 11a, 11b in der hochgeklappten Stellung der Fahrerplattform 5 an dem Trägerbauteil 12 anliegen.

Die Luftfeder 10 ist über das Ventil 30 und den entsprechenden Ventilanschlussstutzen auf einfache Weise im Einstelldruck veränderbar und anpassbar, so dass eine einfache Anpassung der Federung an das Gewicht der Bedienperson erzielt werden kann. Das Aufpumpen bzw. Luftablassen der Luftfeder 10 kann herbei über eine handbetätigte Luftpumpe erfolgen oder über eine in Fabrikhallen vorhandene stationäre Druckluftversorgung. Zudem ist möglich, in dem Lagertechnikstapler 1 einen Druckluftkompressor einzubauen, um eine interne Druckluftversorgung der Luftfeder 10 zu ermöglichen. Durch die Veränderung und Anpassung des Einstelldruckes der Luftfeder 10 ändert sich in axialer Richtung die Bauhöhe der Luftfeder, wobei über die Hebel 35a, 35b und die Aufnahmen 36a, 36b in der Andrückplatte 25 bei sich verändernder axialer Bauhöhe der Luftfeder 10 eine einfache Abstützung der Fahrerplattform 5 an der Luftfeder 10 erzielt werden kann.

Durch die Abstützung der Fahrerplattform 5 mittels der an den Schwenkträgern 11a, 11b angeordneten Hebeln 35a, 35b an der schwenkbaren Andrückplatte 25 kann hierbei eine platzsparende Bauweise in Fahrzeuglängsrichtung erzielt werden, bei der eine horizontale Anordnung der Luftfeder 10 in Fahrzeugslängsrichtung und eine Abstützung der Luftfeder 10 an einer vertikalen Rahmenplatte des Fahrzeugrahmens des Lagertechnikstaplers 1 erzielt werden kann.

Zudem kann durch die Befestigung der Luftfeder 10 an der Andrückplatte 25, und der Lagerung der Fahrerplattform 5 sowie der Lagerung der Andrückplatte 25 an dem Trägerbauteil 12 eine einfach aufgebaute Baueinheit für die gefederte Fahrerplattform 5 gebildet werden, die auf einfache Weise an dem Lagertechnikstapler 1 über die Verschraubungen 15 befestigt werden kann, so dass ein Lagertechnikstapler 1 auf einfache Weise mit der gefederten Fahrerplattform 5 versehen werden kann.

## Patentansprüche

1. Lagertechnikstapler, insbesondere Hubwagen, mit einer an einem Fahrzeugrahmen gefederten Fahrerplattform, insbesondere einer Fahrerstandplattform, wobei die Fahrerplattform (5) mittels einer im Einstelldruck veränderbaren Luftfeder (10) gefedert an dem Fahrzeugrahmen abgestützt ist, wobei durch die Veränderung des Einstelldruckes eine Anpassung des Federungsverhaltens erzielt wird, **dadurch gekennzeichnet dass** die Luftfeder (10) als Balgzylinder (20), insbesondere als Einfaltenbalgzylinder, ausgebildet ist.

2. Lagertechnikstapler nach Anspruch 1, **dadurch gekennzeichnet, dass** die Luftfeder (10) mit einem Ventil (30) zum Anschluss an eine Luftpumpe oder eine stationäre Druckluftversorgung versehen ist.

3. Lagertechnikstapler nach Anspruch 1, **dadurch gekennzeichnet, dass** die Luftfeder (10) mit einem Druckluftkompressor des Lagertechnikstaplers (1) in Verbindung steht.

4. Lagertechnikstapler nach einem der Ansprüche 1 bis 3, **dadurch gekennzeichnet, dass** die Fahrerplattform (5) um eine im wesentlichen horizontale Schwenkachse (6) schwenkbar gelagert ist, wobei die Fahrerplattform (5) mit mindestens einem Hebel (35a; 35b) versehen ist, der mit einer Andrückplatte (25) in Wirkverbindung bringbar ist, wobei die Andrückplatte (25) mit der Luftfeder (10) in Wirkverbindung steht.

5. Lagertechnikstapler nach Anspruch 4, **dadurch gekennzeichnet, dass** die Andrückplatte (25) um eine im Wesentlichen horizontale Schwenkachse (27) schwenkbar gelagert ist.

6. Lagertechnikstapler nach Anspruch 4 oder 5, **dadurch gekennzeichnet, dass** die Andrückplatte (25) mit mindestens einer Aufnahme (36a; 36b) für den Hebel (35a; 35b) versehen ist.

7. Lagertechnikstapler nach einem der Ansprüche 4 bis 6, **dadurch gekennzeichnet, dass** die Fahrerplattform (5) mittels zwei seitlich beabstandeter Schwenkträgern (11a, 11b) um die Schwenkachse (6) schwenkbar gelagert ist und die Andrückplatte (25) zwei seitlich beabstandete Aufnahmen (36a, 36b) für Hebel (35a, 35b) aufweist, wobei die Hebel (35a, 35b) an den Schwenkträgern (36a, 36b) ausgebildet sind und die Luftfeder (10) in seitlicher Richtung zwischen den Hebeln (35a, 35b) angeordnet ist.

8. Lagertechnikstapler nach einem der Ansprüche 4 bis 7, **dadurch gekennzeichnet, dass** die Luftfeder (10) zwei Anschlussplatten (21, 22) mit einem dazwischen angeordneten Balgzylinder (20) umfasst, wobei die Luftfeder (10) mittels einer Anschlussplatte (21) an der Andrückplatte (25) befestigt ist und mittels der weiteren Anschlussplatte (22) an dem Fahrzeugrahmen abgestützt ist.

9. Lagertechnikstapler nach einem der Ansprüche 4 bis 8, **dadurch gekennzeichnet, dass** die Andrückplatte (25) und die Fahrerplattform (5) an einem Trägerbauteil (12) schwenkbar befestigt sind, das an dem Fahrzeugrahmen des Lagertechnikfahrzeugs (1) lösbar befestigbar ist.

10. Lagertechnikstapler nach Anspruch 9, **dadurch gekennzeichnet, dass** das Trägerbauteil (12) mit seitlich beabstandeten Lagerflanschen (13) für die Lagerung der Schwenkträger (11a, 11b) der Fahrerplattform (5) und für die Lagerung von Lagerflanschen (25a, 25b) der Andrückpatte (25) versehen ist, wobei das Trägerbauteil (12) zwischen den Lagerflanschen (13) mit einer Aussparung zur Aufnahme der Luftfeder (10) versehen ist.

11. Lagertechnikstapler nach Anspruch 10, **dadurch gekennzeichnet, dass** die Aufnahmen (36a, 36b) für die Hebel (35a, 35b) an der Andrückplatte (25) im Bereich der Lagerflansche (25a, 25b) der Andrückplatte (25) angeordnet sind.

12. Lagertechnikstapler nach einem der Ansprüche 5 bis 11, **dadurch gekennzeichnet, dass** die Schwenkachse (6) der Fahrerplattform (5) und die Schwenkachse (27) der Andrückplatte (25) in vertikaler Richtung beabstandet sind, wobei die Hebel (35a, 35b) und die Aufnahmen (36a, 36b) zwischen den Schwenkachsen (6, 27) angeordnet sind.

13. Lagertechnikstapler nach einem der Ansprüche 4 bis 12, **dadurch gekennzeichnet, dass** an mindestens einem Hebel (35a; 35b) der Fahrerplattform (5) eine Federeinrichtung (41) angeordnet ist, die über einen Betätigungsstößel (42) mit der Aufnahme (36a; 36b) in Wirkverbindung bringbar ist, um eine Einklappbewegung der Fahrerplattform (5) zu unterstützen.

14. Lagertechnikstapler nach einem der vorangegangenen Ansprüche, **dadurch gekennzeichnet, dass** der Lagertechnikstapler (1) zum wahlweisen Betrieb im Mitgängerbetrieb und Mitfahrerbetrieb ausgebildet ist und die Fahrerplattform (5) als klappbare Fahrerstandplattform (5) ausgebildet ist, die von einer eingeklappten Stellung im Mitgängerbetrieb in eine ausgeklappte Stellung im Mitfahrerbetrieb klappbar ist, wobei die Fahrerstandplattform (5) in der ausgeklappten Stellung für den Mitfahrerbetrieb mittels der Luftfeder (10) gefedert am Fahrzeugrahmen abgestützt ist.

## Claims

1. Storage truck, in particular lift truck, with a driver platform spring-mounted on a vehicle frame, in particular a driver stand-on platform, wherein the driver platform (5) is supported on the vehicle frame in a sprung manner by means of a pneumatic spring (10), which can be varied in adjustment pressure, wherein an adaptation of the suspension performance is obtained by varying the adjustment pressure, **characterized in that** the pneumatic spring (10) is configured as a bellows cylinder (20), in particular as a collapsing bellows cylinder.

2. Storage truck according to Claim 1, **characterized in that** the pneumatic spring (10) is provided with a valve (30) for connection to an air pump or to a stationary compressed air supply.

3. Storage truck according to Claim 1, **characterized in that** the pneumatic spring (10) is connected to a compressed air compressor of the storage truck (1).

4. Storage truck according to one of Claims 1 to 3, **characterized in that** the driver platform (5) is mounted pivotably about a substantially horizontal pivot axis (6), wherein the driver platform (5) is provided with at least one lever (35a; 35b) which can be brought into operative connection with a pressure plate (25), wherein the pressure plate (25) is operatively connected to the pneumatic spring (10) .

5. Storage truck according to Claim 4, **characterized in that** the pressure plate (25) is mounted pivotably about a substantially horizontal pivot axis (27).

6. Storage truck according to Claim 4 or 5, **characterized in that** the pressure plate (25) is provided with at least one receptacle (36a; 36b) for the lever (35a; 35b).

7. Storage truck according to one of Claims 4 to 6, **characterized in that** the driver platform (5) is mounted pivotably about the pivot axis (6) by means of two laterally spaced-apart pivoting supports (11a, 11b), and the pressure plate (25) has two laterally spaced-apart receptacles (36a, 36b) for levers (35a, 35b), wherein the levers (35a, 35b) are formed on the pivoting supports (36a, 36b), and the pneumatic spring (10) is arranged in a lateral direction between the levers (35a, 35b).

8. Storage truck according to one of Claims 4 to 7, **characterized in that** the pneumatic spring (10) comprises two connecting plates (21, 22) with a bellows cylinder (20) arranged in between, wherein the pneumatic spring (10) is fastened to the pressure plate (25) by means of a connecting plate (21) and is supported on the vehicle frame by means of the further connecting plate (22).

9. Storage truck according to one of Claims 4 to 8, **characterized in that** the pressure plate (25) and the driver platform (5) are fastened pivotably to a support component (12) which is fastenable releasably to the vehicle frame of the storage truck (1).

10. Storage truck according to Claim 9, **characterized in that** the support component (12) is provided with laterally spaced-apart bearing flanges (13) for the mounting of the pivoting supports (11a, 11b) of the driver platform (5) and for the mounting of bearing flanges (25a, 25b) of the pressure plate (25), wherein the support component (12) is provided with a recess between the bearing flanges (13) for accommodating the pneumatic spring (10).

11. Storage truck according to Claim 10, **characterized in that** the receptacles (36a, 36b) for the levers (35a, 35b) are arranged on the pressure plate (25) in the region of the bearing flanges (25a, 25b) of the pressure plate (25).

12. Storage truck according to one of Claims 5 to 11, **characterized in that** the pivot axis (6) of the driver platform (5) and the pivot axis (27) of the pressure plate (25) are spaced apart in the vertical direction, wherein the levers (35a, 35b) and the receptacles (36a, 36b) are arranged between the pivot axes (6, 27).

13. Storage truck according to one of Claims 4 to 12, **characterized in that** a spring device (41) is arranged on at least one lever (35a; 35b) of the driver platform (5) and can be brought into operative connection with the receptacle (36a; 36b) via an actuating ram (42) in order to assist a folding-in movement of the driver platform (5).

14. Storage truck according to one of the preceding claims, **characterized in that** the storage truck (1) is configured for the optional operation in the pedestrian mode and stand-on mode, and the driver platform (5) is configured as a foldable driver stand-on platform (5) which is foldable from a folded-in position in the pedestrian mode into an opened-out position in the stand-on mode, wherein the driver stand-on platform (5) is supported in the opened-out position for the stand-on mode on the vehicle frame in a sprung manner by means of the pneumatic spring (10).

## Revendications

1. Chariot élévateur de stockage, en particulier chariot de levage, avec une plate-forme de conducteur suspendue sur un châssis de véhicule, en particulier une plate-forme de conducteur debout, dans lequel la plate-forme de conducteur (5) s'appuie sur le châssis de véhicule en étant suspendue au moyen d'un amortisseur pneumatique (10) à pression de réglage variable, dans lequel on produit une adaptation du comportement de la suspension par la variation de la pression de réglage, **caractérisé en ce que** l'amortisseur pneumatique (10) est réalisé sous la forme d'un cylindre à soufflet (20), en particulier d'un cylindre à soufflet à un seul pli.

2. Chariot élévateur de stockage selon la revendication 1, **caractérisé en ce que** l'amortisseur pneumatique (10) est muni d'une soupape (30) pour le raccordement à une pompe à air ou à une alimentation fixe en air comprimé.

3. Chariot élévateur de stockage selon la revendication 1, **caractérisé en ce que** l'amortisseur pneumatique (10) est en communication avec un compresseur d'air comprimé du chariot élévateur de stockage (1).

4. Chariot élévateur de stockage selon l'une quelconque des revendications 1 à 3, **caractérisé en ce que** la plate-forme de conducteur (5) est montée de façon pivotante autour d'un axe de pivotement essentiellement horizontal (6), dans lequel la plate-forme de conducteur (5) est munie d'au moins un levier (35a; 35b), qui peut être mis en liaison active avec une plaque de pression (25), dans lequel la plaque de pression (25) est en liaison active avec l'amortisseur pneumatique (10).

5. Chariot élévateur de stockage selon la revendication 4, **caractérisé en ce que** la plaque de pression (25) est montée de façon pivotante autour d'un axe de pivotement essentiellement horizontal (27).

6. Chariot élévateur de stockage selon la revendication 4 ou 5, **caractérisé en ce que** la plaque de pression (25) est munie d'au moins un logement (36a; 36b) pour le levier (35a; 35b).

7. Chariot élévateur de stockage selon l'une quelconque des revendications 4 à 6, **caractérisé en ce que** la plate-forme de conducteur (5) est montée de façon pivotante autour de l'axe de pivotement (6) au moyen de deux supports pivotants latéralement espacés (11a, 11b) et la plaque de pression (25) présente deux logements latéralement espacés (36a, 36b) pour des leviers (35a, 35b), dans lequel les leviers (35a, 35b) sont formés sur les supports pivotants (36a, 36b) et l'amortisseur pneumatique (10) est disposé en direction latérale entre les leviers (35a, 35b).

8. Chariot élévateur de stockage selon l'une quelconque des revendications 4 à 7, **caractérisé en ce que** l'amortisseur pneumatique (10) comprend deux plaques de raccordement (21, 22) avec un cylindre à soufflet (20) disposé entre celles-ci, dans lequel l'amortisseur pneumatique (10) est fixé à la plaque de pression (25) au moyen d'une plaque de raccordement (21) et s'appuie sur le châssis de véhicule au moyen de l'autre plaque de raccordement (22).

9. Chariot élévateur de stockage selon l'une quelconque des revendications 4 à 8, **caractérisé en ce que** la plaque de pression (25) et la plate-forme de conducteur (5) sont fixées de façon pivotante sur un composant de support (12), qui peut être fixé de façon démontable au châssis de véhicule du chariot élévateur de stockage (1).

10. Chariot élévateur de stockage selon la revendication 9, **caractérisé en ce que** le composant de support (12) est muni de brides d'appui latéralement espacées (13) pour l'appui des supports pivotants (11a, 11b) de la plate-forme de conducteur (5) et pour l'appui de brides d'appui (25a, 25b) de la plaque de pression (25), dans lequel le composant de support (12) est muni entre les brides d'appui (13) d'une découpe destinée à recevoir l'amortisseur pneumatique (10).

11. Chariot élévateur de stockage selon la revendication 10, **caractérisé en ce que** les logements (36a, 36b) pour les leviers (35a, 35b) sont disposés sur la plaque de pression (25) dans la région des brides d'appui (25a, 25b) de la plaque de pression (25).

12. Chariot élévateur de stockage selon l'une quelconque des revendications 5 à 11, **caractérisé en ce que** l'axe de pivotement (6) de la plate-forme de conducteur (5) et l'axe de pivotement (27) de la plaque de pression (25) sont espacés en direction verticale, dans lequel les leviers (35a, 35b) et les logements (36a, 36b) sont disposés entre les axes de pivotement (6, 27).

13. Chariot élévateur de stockage selon l'une quelconque des revendications 4 à 12, **caractérisé en ce qu'**un dispositif de ressort (41) est disposé sur au moins un levier (35a; 35b) de la plate-forme de conducteur (5) et peut être mis en liaison active avec le logement (36a; 36b) au moyen d'un poussoir d'actionnement (42), afin de soutenir un mouvement de relèvement de la plate-forme de conducteur (5).

14. Chariot élévateur de stockage selon l'une quelconque des revendications précédentes, **caractérisé en ce que** le chariot élévateur de stockage (1) est conçu pour le fonctionnement au choix entre le mode de conduite accompagnée et le mode de conduite embarquée et la plate-forme de conducteur (5) est réalisée sous la forme d'une plate-forme de conducteur debout rabattable (5), qui peut être rabattue d'une position relevée en mode de conduite accompagnée à une position rabattue en mode de conduite embarquée, dans lequel la plate-forme de conducteur debout (5) dans la position rabattue pour le mode de conduite embarquée est appuyée sur le châssis de véhicule de façon suspendue au moyen de l'amortisseur pneumatique (10) .
